(19) Europäisches Patentamt
European Patent Office
Office européen des brevets

(11) **EP 3 447 095 B1**

(12) **EUROPÄISCHE PATENTSCHRIFT**

(45) Veröffentlichungstag und Bekanntmachung des Hinweises auf die Patenterteilung:
**29.01.2020 Patentblatt 2020/05**

(51) Int Cl.:
***C09D 5/00*** *(2006.01)*

(21) Anmeldenummer: **18187531.1**

(22) Anmeldetag: **06.08.2018**

(54) **BASISCHER HYDROPHOBER FÜLLSTOFF**

BASIC HYDROPHOBIC FILLER

MATIÈRE DE CHARGE HYDROPHOBE BASIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.08.2017 DE 102017119361**
**20.03.2018 DE 102018106431**

(43) Veröffentlichungstag der Anmeldung:
**27.02.2019 Patentblatt 2019/09**

(73) Patentinhaber: **Gebrüder Dorfner GmbH & Co. Kaolin- und Kristallquarzsand-Werke KG**
**92242 Hirschau (DE)**

(72) Erfinder:
• **Kräuter, Reinhard**
**92237 Sulzbach-Rosenberg (DE)**
• **Eiberweiser, Susanne**
**93167 Falkenstein (DE)**

(74) Vertreter: **Hannke, Christian**
**Hannke Bittner & Partner**
**Patent- und Rechtsanwälte mbB**
**Prüfeninger Straße 1**
**93049 Regensburg (DE)**

(56) Entgegenhaltungen:
**EP-A1- 1 882 722     WO-A1-2008/098069**
**WO-A1-2008/106494**

**Beschreibung**

Die vorliegende Erfindung betrifft einen Füllstoff, insbesondere einen pulverförmigen, für eine Beschichtungszusammensetzung, insbesondere für eine Farbe einen Lack oder ein Imprägniermittel. Außerdem betrifft die Erfindung einen solchen Füllstoff enthaltende Beschichtungszusammensetzung. Weiterhin betrifft die Erfindung Verwendungen eines solchen Füllstoffs.

Aus dem Stand der Technik ist bekannt, dass hohe pH-Werte das Wachstum von Algen und vielen Pflanzen verhindert oder verlangsamt. Auch ist für das Wachstum von Algen, Schimmel und vielen Pflanzen Wasser notwendig, sodass auch Trockenheit das Wachstum von Algen, Schimmel und vielen Pflanzen verhindert oder verlangsamt. In Bereichen hoher Feuchtigkeit oder beim Vorhandensein von Wasser wird außerdem Korrosion begünstigt, welche zudem durch einen niedrigen pH-Wert weiter beschleunigt werden kann.

Materialien mit hohen pH-Werten, welche das Wachstum von Algen, Schimmel und vielen Pflanzen sowie Korrosion verhindern oder verlangsamen könnten, sind für viele Anwendungen aufgrund ihrer übrigen Materialeigenschaften jedoch nicht geeignet. Daher ist es eine Aufgabe der vorliegenden Erfindung, einen Füllstoff bereit zu stellen, welcher in einer Zusammensetzung zur Oberflächenbehandlung (im Folgenden auch als "Beschichtungszusammensetzung" oder "Beschichtungssystem" bezeichnet) eingesetzt werden kann und bewirkt, dass nach Aufbringen der Zusammensetzung auf ein geeignetes Material oder einen geeigneten Körper, dieses Material oder dieser Körper weniger stark von Schimmel, Algen und/oder Pflanzen bewachsen wird und/oder weniger korrodiert.

In diesem Zusammenhang beschreiben EP1882722A1, WO2008/106494A1 und WO2008/089069A1 jeweils Zusammensetzungen, insbesondere Beschichtungszusammensetzungen, welche Füllstoffe enthalten, wobei die Füllstoffe Trägerpartikel und eine entsprechende Oberflächenbeschichtung umfassen.

Diese Aufgabe wird gelöst durch einen Füllstoff, insbesondere einen pulverförmigen, für eine Beschichtungszusammensetzung, insbesondere für eine Farbe, einen Lack oder ein Imprägniermittel gelöst. Die Erfindung ist dadurch gekennzeichnet, dass der Füllstoff Partikel umfasst, welche eine Oberflächenbeschichtung aufweisen, wobei die Partikel eine silikatische oder carbonatische Komponente und in wässriger Lösung einen basischen pH-Wert aufweisen und die Oberflächenbeschichtung der Partikel einen der Stoffe Alkyltrimethoxysilan, Alkyltrietoxysilan und/oder Alkylsiloxan umfasst, wobei die Oberflächenbeschichtung des Partikels Ionenaustauscheigenschaften aufweist und eine hydrophobe Komponente umfasst und wobei der Gewichtsanteil der Oberflächenbeschichtung der Partikel weniger als 10 % am Gesamtgewicht des Füllstoffs beträgt.

Der Begriff Füllstoff bezeichnet einen universell einmischbaren Stoff, der bevorzugt im festen Aggregatzustand vorliegt. Bevorzugt handelt es sich bei dem Füllstoff um ein Pulver oder auch um einen rieselfähigen Stoff, ähnlich einem Sand. Der Füllstoff enthält die Partikel. Diese werden dabei auch als Trägerpartikel bezeichnet. Die Oberflächenbeschichtung der Partikel bezeichnet eine Beschichtung der Partikeloberfläche. Dabei kann die Partikeloberfläche vollständig oder auch nur teilweise mit der Oberflächenbeschichtung bedeckt sein. Die Oberflächenbeschichtung wird in einem Beschichtungsverfahren auf den Partikel aufgebracht.

Erfindungsgemäß umfasst die Oberflächenbeschichtung eine hydrophobe Komponente.

Mit Hilfe der hydrophoben Komponente, auch als aktive Komponente bezeichnet, ist der Füllstoff, also der Partikel mit der Oberflächenbeschichtung hydrophober als der unbeschichtete Trägerpartikel einstellbar. Dabei ist es denkbar, dass die hydrophobe Komponente die einzige Komponente der Oberflächenbeschichtung ist, oder auch, dass die Oberflächenbeschichtung weitere Komponenten umfasst. Weiterhin ist es denkbar, dass die Oberflächenbeschichtung mehrere hydrophobe Komponenten umfasst. Dabei ist es denkbar, dass die Oberflächenbeschichtung keine, eine oder auch mehrere weitere Komponenten zusätzlich zu den hydrophoben Komponenten umfasst.

Gemäß zumindest einer weiteren Ausführungsform besteht der Partikel aus teilkalziniertem Dolomit, Calciumsilikathydrat und/oder Kaolin.

Besonders bevorzugte Partikelmaterialien, auch als Trägermaterialien bezeichnet, sind dabei teilkalzinierter Dolomit und Calciumsilikathydrat. Weniger bevorzugt ist Kaolin, da sich bei diesem durch eine entsprechende Oberflächenbeschichtung zwar die Wasseraufnahme reduzieren lässt, jedoch der gewünschte hohe pH-Wert nicht (zumindest nicht dauerhaft) einstellen lässt. Kaolin ist jedoch nicht ausgeschlossen.

Der pH-Wert einer 10%igen Suspension der oben genannten Füllstoffe ist bei gleicher Oberflächenbeschichtung abhängig vom verwendeten Trägerpartikelmaterial. Die jeweils in Abhängigkeit des Trägerpartikels gemessenen pH-Werte sind:

-   Carbonat-Verbindung: pH ca. 11,0 ($\pm$0,5),
-   Silikat-Verbindung: pH ca. 10,5 ($\pm$0,5) und
-   Kaolin: pH ca. 6 ($\pm$0,5).

Aufgrund der oben für Beispielverbindungen angegebenen hohen pH-Werte sind diese zum Teil kennzeichnungspflichtig. Bevorzugt sind jedoch Formulierungen für Zusammensetzungen zur Oberflächenbehandlung, welche nicht kennzeichnungspflichtig sind, da der pH-Wert der Zusammensetzung unterhalb des kritischen Wertes liegt und es kein kennzeichnungspflichtiges Biozid enthält.

Gemäß zumindest einer weiteren Ausführungsform umfasst die Alkylgruppe zumindest eines Stoffes der Oberflächenbeschichtung der Partikel zumindest eine Kohlenstoffkette mit 6 bis 12 Kohlenstoffatomen, bevorzugt zwischen 7 und 10 Kohlenstoffatomen, insbesondere bevorzugt 8 Kohlenstoffatome.

Bevorzugt ist die Alkylgruppe Teil von zumindest einem der Stoffe Alkyltrimethoxysilan, Alkyltrietoxysilan oder Alkylsiloxan. Über die Länge der Kohlenstoffkette der Alkylgruppe sind die Eigenschaften, wie z. B. hydrophobisches Verhalten, der Oberflächenbeschichtung einstellbar. Bevorzugt weisen die Stoffe Alkyltrimethoxysilan, Alkyltrietoxysilan und/oder Alkylsiloxan durch die Anzahl der Kohlenstoffatome in der zumindest eine Kohlenstoffkette von 6 bis 12, bevorzugt zwischen 7 und 10, insbesondere bevorzugt 8 Atomen hydrophobe Eigenschaften auf, so dass diese Stoffe die aktive bzw. hydrophobe Komponente der Oberflächenbeschichtung darstellen.

Die zumindest eine Kohlenstoffkette kann dabei linear oder verzweigt sein. Liegen mehrere Kohlenstoffketten vor, können sowohl lineare als auch verzweigte Ketten enthalten sein.

Erfindungsgemäß weist die Oberflächenbeschichtung des Partikels Ionenaustauscheigenschaften auf.

Die Kombination der basischen und hydrophoben Eigenschaften des Füllstoffs hat sich auch deshalb als vorteilhaft erwiesen, da sie lange wirksam bleibt. Die basische Eigenschaft des Füllstoffs bzw. der hohe pH-Wert macht sich (definitionsgemäß) erst in Gegenwart von Wasser bemerkbar. Durch die hydrophoben Eigenschaften des Füllstoffs, eingestellt durch die Oberflächenbeschichtung der Partikel, wird Wasser jedoch verdrängt bzw. die Rücktrocknung nach Befeuchtung beschleunigt. Ohne Wasser findet naturgemäß kein, oder nur ein sehr reduzierter, Bewuchs mit Schimmel, Algen oder anderen Pflanzen sowie kaum oder keine Korrosion statt. Wenn ausreichend Wasser für Korrosion und/oder den potentiellen Bewuchs mit Organismen vorhanden ist, wird in der Phase, in der Wasser im System vorhanden ist, der pH-Wert so hoch, dass trotz des Wassers kein Bewuchs und/oder keine Korrosion stattfinden können. Bevorzugt kann somit unter allen Bedingungen die Korrosion und/oder der Bewuchs mit unerwünschten Organismen ausgeschlossen werden. Da die zur Einstellung des hohen pH-Wertes enthaltenen Komponenten nur zu bestimmten Zeiten, nämlich in Feuchtphasen aktiv werden müssen, kann deren Aktivität über einen langen Zeitraum aufrechterhalten werden. Bevorzugt ist während Trockenphasen eine Reaktivierung der basischen Komponente möglich. Dies kann bevorzugt ohne menschliches Zutun erfolgen. Um dies zu gewährleisten weist die aktive Komponente bevorzugt Ionenaustauscheigenschaften auf.

Gemäß zumindest einer weiteren Ausführungsform weisen die Partikel einen Durchmesser zwischen 0.01 $\mu$m und 5 mm, bevorzugt in einem Bereich von 0,02 $\mu$m bis 2 mm, besonders bevorzugt in einem Bereich von 0,05 $\mu$m bis 1 mm auf.

Die Partikelgröße des Trägermaterials, bzw. der Trägerpartikel, kann in Abhängigkeit von den jeweiligen Anforderungen ausgewählt werden. Es hat sich jedoch gezeigt, dass kleinere Trägerpartikel aufgrund ihres günstigeren Verhältnisses von Oberfläche zu Volumen vorteilhaft sind. In einer bevorzugten Ausführungsform liegt die Partikelgröße der Trägerpartikel in einem Bereich von 0,01 $\mu$m bis 5 mm, weiter bevorzugt in einem Bereich von 0,02 $\mu$m bis 2 mm, besonders bevorzugt in einem Bereich von 0,05 $\mu$m bis 1 mm. Soweit nichts anderes angegeben ist, sollen im Folgenden Partikelgrößen jeweils als $D_{50}$-Werte verstanden werden.

Erfindungsgemäß beträgt der Gewichtsanteil der Oberflächenbeschichtung der Partikel weniger als 10 % am Gesamtgewicht des Füllstoffs. Gemäß zumindest einer weiteren Ausführungsform beträgt der Gewichtsanteil der Oberflächenbeschichtung der Partikel bevorzugt zwischen 0,5 und 8 % und weiter bevorzugt zwischen 1 und 5 % am Gesamtgewicht des Füllstoffs.

Sofern im Zusammenhang mit Prozentangaben keine anderslautenden Angaben gemacht werden, bezeichnen diese im Rahmen dieser Erfindung jeweils Gewichtsprozente.

Gemäß zumindest einer weiteren Ausführungsform ist der Füllstoff in der Beschichtungszusammensetzung suspergiert, wobei der Gewichtsanteil des Füllstoffs zwischen 5 % und 80 %, besonders bevorzugt zwischen 10 - 50 %, insbesondere bevorzugt zwischen 12 - 25 % am Gesamtgewicht der Beschichtungszusammensetzung beträgt.

In einer bevorzugten Ausführungsform wird der Füllstoff bzw. eine diesen Füllstoff enthaltende Beschichtungszusammensetzung einem Beschichtungs- oder Baustoff zugesetzt, welcher ausgewählt ist aus einer Gruppe, die Putze, Dispersionsfarben, Lacke, Zement, Dachbeschichtungen, Dichtmassen und Fugenmaßen umfasst.

Bevorzugt wird der Füllstoff mit hydrophoben und basischen Eigenschaften in ein Beschichtungssystem eingebracht, wodurch dessen pH-Wert auf hohem Niveau gehalten wird. Weiterhin hat sich gezeigt, dass bei mit einem solchen Beschichtungssystem beschichteten Materialien die Wasseraufnahme reduziert und Rücktrocknung beschleunigt werden kann.

Da Wasserschäden, beispielsweise verursacht durch Durchfeuchtungen, Frostschäden oder Schimmel- und Algenbefall, im Baubereich mit die aufwändigsten Sanierungen nach sich ziehen, hat sich diese vorteilhafte Eigenschaft insbesondere für im Baubereich verwendete Materialien als vorteilhaft erwiesen.

Besonders bevorzugt ist, wenn in einer solchen Beschichtungszusammensetzung die Oberfläche des Füllstoffs verfügbar bzw. für wachsende Organismen und/oder Wasser zugänglich ist. Besonders bevorzugt ist auch, wenn es sich bei einer solchen Beschichtungszusammensetzung um ein offenes System, insbesondere ein (Wasser-)diffusionsoffenes System handelt. Außerdem haben sich hoch gefüllte Beschichtungszusammensetzungen als vorteilhaft erwiesen. Bevorzugt sind die erfindungsgemäßen Füllstoffe daher Bestandteil topfkonservierter Systeme und/oder bewuchsgehemmter Systeme, die nicht kennzeichnungspflichtig sind, da diese Systeme besonders bevorzugt keine Biozide enthalten und besonders bevorzugt einen pH-Wert unterhalb des kritischen Wertes aufweisen.

Gemäß zumindest einer weiteren Ausführungsform weist die Beschichtungszusammensetzung einen pH-Wert kleiner 11.5, bevorzugt zwischen 5.5 und 11.5, besonders bevorzugt zwischen 10.0 und 11.5 auf.

Beschichtungszusammensetzungen mit einem pH-Wert < 11.5 sind gemäß EG Nr. 1272/2008 Abschnitt 3.3.3.1.2 nicht nach H315, H318 oder H335 kennzeichnungspflichtig. Da der erfindungsgemäße Füllstoff außerdem biozidfrei ist, ist die Beschichtungszusammensetzung mit einem pH-Wert < 11.5 auch diesbezüglich nicht kennzeichnungspflichtig. In dieser Ausführungsform ist im Falle von Partikeln im Füllstoff, welche eine carbonatische Komponente aufweisen, die Konzentration der Partikel in der Beschichtungszusammensetzung so einzustellen, dass ein pH-Wert < 11.5 erreicht wird.

Beschichtungszusammensetzungen mit einem pH-Wert größer oder gleich 11.5 sind jedoch nicht von der Erfindung ausgenommen. Diese Beschichtungszusammensetzungen sind zwar hinsichtlich ihres basischen Charakters kennzeichnungspflichtig. Jedoch enthalten solche erfindungsgemäßen Beschichtungszusammensetzungen nach wie vor kein Biozid, wodurch diese gegenüber biozidhaltigen Beschichtungszusammensetzungen einen Vorteil aufweisen, da die Korrosion und/oder der Bewuchs mit Algen, Schimmel oder Pflanzen ebenfalls verhindert bzw. reduziert wird und zusätzlich eine bessere Umweltverträglichkeit des Produktes gewährleistet ist.

Aus dem Stand der Technik ist bekannt, dass stark basische Füllstoffe sehr gut geeignet sind zur Formulierung von Korrosionsschutzlacken. Mit steigendem pH-Wert verlangsamt sich die Korrosion der Metalloberfläche. Bei ausreichend hohem pH-Wert kann die Korrosion gestoppt werden (Pourbaix-Diagramm). Die Metalloberfläche befindet sich im Bereich der Passivität und wird somit nicht oxidiert werden und somit nicht korrodieren. Der pH-Wert, ab dem eine Metalloberfläche nicht mehr oxidiert wird, hängt einerseits vom Metall bzw. der Metallzusammensetzung und andererseits vom Potential der Lösung ab, so dass keine allgemeingültigen Werte angegeben werden können.

Aus den unten stehenden Reaktionsgleichungen ist ersichtlich, dass Wasser eine wesentliche Rolle für die kathodische Reaktion beim Korrosionsvorgang spielt. Darüber hinaus ist Wasser häufig ein Verursacher von Haftungsverlusten zwischen Beschichtung und Metalloberfläche, was wiederum den Transport korrosionsaktiver Stoffe begünstigt. Daher kann das Ausmaß der Korrosion auch reduziert werden, indem das Beschichtungssystem so eingestellt wird, dass es möglichst wenig Wasser aufnehmen kann. Dies kann einerseits durch geeignete nicht quellfähige Bindemittel oder aber durch hydrophobe Füllstoffe erreicht werden. Durch die reduzierte Wasseraufnahme und beschleunigte Rücktrocknung beim Einsatz von den hier beschriebenen Füllstoffen ist weniger Wasser an der Metalloberfläche für die Korrosionsreaktion verfügbar.

Man unterscheidet allgemein zwischen der chem. und elektrochemischer Korrosion. Dabei sind die erfindungsgemäßen Füllstoffe dazu geeignet, die elektrochemische Korrosion zu verlangsamen, hinauszuzögern oder sogar zu verhindern.

Bei jedem Korrosionsvorgang läuft eine Anodenreaktion (Oxidation der Metalloberfläche unter Abgabe von e⁻) und eine Kathodenreaktion (Reduktion von Sauerstoff bei pH > 4 oder Wasserstoffproton bei pH < 4) ab. Geschwindigkeitsbestimmender Schritt ist dabei meist die Kathodenreaktion. Kann diese gehemmt oder verhindert werden, gilt dies auch für die Anodenreaktion.

Anodischer Bereich $\quad Me \rightarrow Me^{2+} + 2e^-$

Kathodischer Bereich

$$H_2O + \frac{1}{2}O_2 + 2e^- \rightarrow 2OH^-$$

Folgereaktionen : $\quad Me^{2+} + 2OH^- \rightarrow Me(OH)_2$

$$2Me(OH)_2 + \frac{1}{2}O_2 + 2H_2O \rightarrow 2Me(OH)_3$$

$Me(OH)_3 \rightarrow MeOOH + H_2O$

Es konnte gezeigt werden, dass ein erfindungsgemäßer Füllstoff auch als Korrosionsschutz (pigment) verwendet werden kann. Bevorzugt wirkt der Füllstoff dabei bi-funktional, nämlich einerseits physikalisch, indem durch die Hydrophobie eine Wasserbarriere aufgebaut bzw. der Zugang von Wasser erschwert wird, und andererseits chemisch, indem aufgrund der Basizität des Füllstoffs die oben dargestellten chemischen Reaktionen, hier insbesondere die Kathodenreaktion, verlangsamt oder sogar unterbunden werden.

Beschichtungszusammensetzungen zum Korrosionsschutz aus dem Stand der Technik enthalten normalerweise einen speziellen Korrosionsinhibitor um den gewünschten Korrosionsschutz zu erreichen. Durch den erfindungsgemäßen Füllstoff kann auf den Einsatz eines solchen Korrosionsinhibitors ganz verzichtet werden oder seine Konzentration zumindest deutlich reduziert werden.

Gemäß zumindest einer weiteren Ausführungsform weist die Beschichtungszusammensetzung weiterhin einen Korrosionsinhibitor auf, wobei der Korrosionsinhibitor weniger als 3 %, bevorzugt unter 2 %, besonders bevorzugt unter 1 % und insbesondere bevorzugt unter 0,5 % am Gesamtgewicht der Beschichtungszusammensetzung beträgt.

Die erfindungsgemäße Aufgabe wird weiterhin gelöst durch Verwendung eines Füllstoffs, welcher eine Oberflächenbeschichtung aufweisende Partikel umfasst, wobei die Partikel eine silikatische oder carbonatische Komponente und in wässriger Lösung einen basischen pH-Wert aufweisen und die Oberflächenbeschichtung der Partikel einen der Stoffe Alkyltrimethoxysilan, Alkyltrietoxysilan und/oder Alkylsiloxan umfasst, in einer Beschichtungszusammensetzung zur Behandlung von Steinen, Keramiken, Metallen oder Baumaterialien gegen Durchfeuchtung, Korrosion sowie Algen-, Schimmel- und/oder Pflanzenbewuchs.

Weiterhin sind die erfindungsgemäßen Füllstoffe zur Topfkonservierung einsetzbar. Ein ausreichend hoher pH-Wert im System verhindert das Wachstum von unerwünschten Organismen während der Lagerung. Durch die o.g. Füllstoffe mit den darin enthaltenen Partikeln kann dieser pH-Wert eingestellt werden. Da die Füllstoffe bevorzugt zumindest hinsichtlich des pH-Wertes eine Depotwirkung aufweisen, kann dieser hohe pH-Wert auch über einen sehr langen Zeitraum aufrechterhalten werden.

Bevorzugt werden die Füllstoffe zur Bewuchshemmung eingesetzt. Wie oben erwähnt ist es bekannt, dass stark basische Füllstoffe das Wachstum von Pilzen und Algen hemmen können. Diese Eigenschaft konnte durch die erfindungsgemäßen Füllstoffe nochmals gesteigert werden, da für das Wachstum von Pilzen und Algen das Vorhandensein von Wasser eine Grundvoraussetzung ist, welches in dem beschichteten Körper durch die Hydrophobie des Füllstoffs nur in verringerter Menge vorliegt. Bevorzugt kann durch die Hydrophobie des Füllstoffs die Wasserbelastung der Beschichtung sowohl mengenmäßig als auch zeitlich reduziert werden. Damit wird den potentiell wachsenden Organismen die Wassergrundlage entzogen.

Durch die Hydrophobie sowie den hohen pH-Wert ist außerdem der zuvor beschriebene Ablauf des Korrosionsprozesses mit seiner anodischen und kathodischen Teilreaktion gehemmt bzw. wird unterbunden, sodass mit der, den Füllstoff enthaltenden Beschichtungszusammensetzung beschichtete Materialien vor Korrosion geschützt werden.

Weitere Vorteile, Ziele und Eigenschaften der vorliegenden Erfindung werden anhand nachfolgender Beschreibung der anliegenden Figuren erläutert.

In den Figuren zeigen:

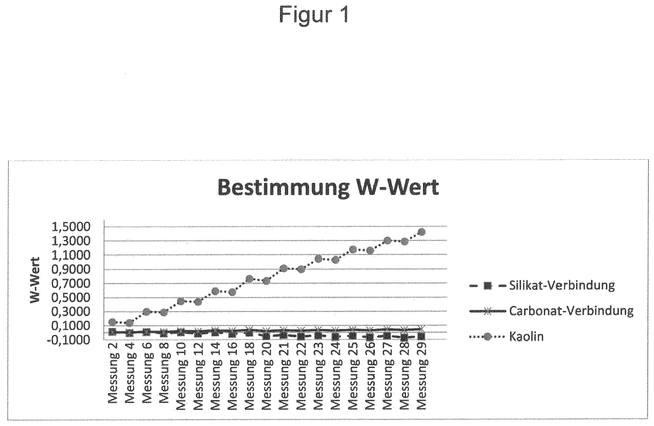

Fig. 1    ein Diagramm des Wasseraufnahmekoeffizienten in Abhängigkeit der Zeit, dargestellt durch zeitlich aufeinanderfolgende Messungen.

Figur 1 zeigt die Bestimmung des Wasseraufnahmekoeffizienten (w-Wert) für Pflastersteine beschichtet mit einem Beschichtungssystem, welches mit 15 % Füllstoff aufweist. Die Prüfung erfolgt in Anlehnung an DIN EN 1062-3:2004. Die Pflastersteine wurden 6h gewässert, gewogen, 18h rückgetrocknet und erneut gewogen. Als Vergleichsmaterial wurden unbeschichtete Kaolinpartikel verwendet. Wie Figur 1 zu entnehmen ist, verbleibt bei den gewählten Versuchsbedingungen der w-Wert von Materialien mit einer Silikat-Verbindung, dargestellt durch die gestrichelte Linie mit viereckigen Messpunktsymbolen, und einer Carbonat-Verbindung, dargestellt durch eine durchgezogene Linie mit Kreuzen als Messpunktsymbolen, jeweils nahe der Basislinie. Demgegenüber steigt für nicht mit dem beschriebenen Beschichtungssystem beschichteten Kaolin der w-Wert kontinuierlich an, in Figur 1 dargestellt durch eine gepunktete Linie mit Kreisen als Messpunktsymbolen. Anders als bei dem unbeschichteten Kaolin kann somit bei den wie oben beschrieben beschichteten Systemen die Wasseraufnahme innerhalb der angegebenen Zeiten verringert werden.

Um die bewuchshemmende Eigenschaft des Füllstoffs zu testen, wurden Wuchsteste für folgende Organismen durchgeführt:

- *Aspergillus niger*,
- *Staphylococcus aureus*,
- *Bacillus Megaterium*,
- *Chlorella vulgaris* und
- *Pseudomonas aeruginosa.*

Für alle diese Organismen konnte die Wirksamkeit bestätigt werden. Dazu wurden u.a. die im Folgenden dargestellten Tests durchgeführt, die die jeweils angegebenen Ergebnisse lieferten.

a) Hemmhoftest

Geprüft wurde der Füllstoff aufgebracht auf Agar, welche anschließend beimpft wurde. Beim Test auf (Baird-Parker-Agar) BP-Agar wurde eine hemmende Wirkung auf das Wachstum von *Staphylococcus aureus* beobachtet. Beim Test auf (Luria Agar) L-Agar konnte eine wachstumshemmende Wirkung auf *Bacillus Megaterium* beobachtet werden. Das Wachstum von *Chlorella vulgaris* auf Algenagar konnte ebenfalls gehemmt werden.

b) Tests in Farbe

In weiteren Versuchen, konnte auch eine Hemmung des Wachstums von *Aspergillus niger* und *Pseudomonas aeruginosa* beobachtet werden (zusätzlich zu den bereits oben genannten Organsimen). Bei diesen Versuchen wurde eine Farbe für Dachsteinbeschichtungen mit 15 % Füllstoff angesetzt, auf Filterpapier aufgezogen und das beschichtete Filterpapier auf Agar gelegt (Beschichtung auf der vom Agar abgewandten Seite) und anschließend beimpft. Die Hemmung des Wachstums war noch besser, als Füllstoff auf Bindemittel eingestreut wurde. Diese Versuche zeigten außerdem, dass es vorteilhaft ist, wenn die Oberfläche des Füllstoffs verfügbar ist und dass der Einsatz des Füllstoffs in möglichst hoch gefüllten und/oder offenen Systemen vorteilhaft ist.

c) Prüfung der Beschichtung in Algensuspension

Bei diesen Versuchen wurde eine Farbe für Dachsteinbeschichtungen mit 15 % Füllstoff angesetzt und auf Filterpapier aufgezogen. Die beschichteten Filter wurden dann in Algensuspension gestellt und für 20 Tage bei 28 - 30 °C dem Sonnenlicht ausgesetzt. Anschließend wurde der Bewuchs auf den Beschichtungen bewertet. Durch Einsatz des stark basischen, hydrophoben Füllstoffs konnte ein Bewuchs vermieden werden.

d) Beständigkeit von Fassadenfarben gegen Schimmelpilze und Algen

Die Beständigkeit gegen Algen wurde analog DIN EN 15458:2014 durchgeführt. Dazu wurden Prüfkörper aus PVC mit zu prüfender Farbe beschichtet und im Klima 23/50 konditioniert. Anschließend erfolgt eine Sterilisation durch Gammabestrahlung. Die sterilen Prüfkörper werden mit einer gemischten Algensuspension übergossen und so lange bebrütet, bis sich ein deutlicher Algenbewuchs gebildet hat (ca. 2 Wochen). Die Suspension wird abgegossen, der Bewuchs auf der Prüfkörperoberfläche visuell bewertet und die Ansätze weitere 2 Wochen bebrütet. Danach werden die Prüfkörper entnommen, visuell bewertet und getrocknet. Nach einer Reinigung mit deionisiertem Wasser durch Abspülen und Trocknung erfolgt nochmalige Bewertung.

Es konnte ein reduzierter Bewuchs durch die getesteten Organismen Grünalge (*Stichococcus bacillaris*) und Blaualge (*Gloeocapsa atrata*) sowie eine erleichterte Reinigung der Oberfläche von Algenbewuchs beobachtet werden.

Die Wirksamkeit eines erfindungsgemäßen Füllstoffs hinsichtlich der Korrosionsschutzeigenschaften konnte an folgendem Beispiel gezeigt werden:

Der hydrophobe basische Füllstoff wurde mit 16,40 % Einsatzmenge in einer Rezeptur, die außerdem 0,8 % Inhibitor enthält, für 240 h einem Salzsprühtest nach EN ISO 9227 unterzogen. Die Auswertung des Blasengrades nach DIN EN ISO 4628-2 ergibt 0(S0).

Beim Vergleich von konventionell eingesetztem Glimmer und hydrophobem basischem Füllstoff in Rezeptur mit Einsatzmenge von 16,40 % und Verzicht auf Zusatz von Inhibitor oder Korrosionsschutzpigment, schneidet der hydrophobe basische Füllstoff bei diesem Salzsprühtest besser ab.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

**Patentansprüche**

1. Füllstoff, insbesondere pulverförmig, für eine Beschichtungszusammensetzung, insbesondere für eine Farbe einen Lack oder ein Imprägniermittel,
**dadurch gekennzeichnet, dass**
der Füllstoff Partikel umfasst, welche eine Oberflächenbeschichtung aufweisen, wobei die Partikel eine silikatische oder carbonatische Komponente und in wässriger Lösung einen basischen pH-Wert aufweisen und die Oberflächenbeschichtung der Partikel einen der Stoffe Alkyltrimethoxysilan, Alkyltrietoxysilan und/oder Alkylsiloxan umfasst, wobei die Oberflächenbeschichtung des Partikels lonenaustauscheigenschaften aufweist und eine hydrophobe Komponente umfasst und wobei der Gewichtsanteil der Oberflächenbeschichtung der Partikel weniger als 10 % am Gesamtgewicht des Füllstoffs beträgt.

2. Füllstoff nach Anspruch 1,
   **dadurch gekennzeichnet, dass**
   der Partikel aus teilkalziniertem Dolomit, Calciumsilikathydrat und/oder Kaolin besteht.

3. Füllstoff nach einem der vorherigen Ansprüche,
   **dadurch gekennzeichnet, dass**
   die Alkylgruppe zumindest eines Stoffes der Oberflächenbeschichtung der Partikel zumindest eine Kohlenstoffkette mit 6 bis 12 Kohlenstoffatomen, bevorzugt zwischen 7 und 10 Kohlenstoffatomen, insbesondere bevorzugt 8 Kohlenstoffatome umfasst.

4. Füllstoff nach einem der vorherigen Ansprüche,
   **dadurch gekennzeichnet, dass**
   die Partikel einen Durchmesser zwischen 0.01 $\mu$m und 5 mm, bevorzugt in einem Bereich von 0,02 $\mu$m bis 2 mm, besonders bevorzugt in einem Bereich von 0,05 $\mu$m bis 1 mm aufweisen.

5. Füllstoff nach einem der vorherigen Ansprüche,
   **dadurch gekennzeichnet, dass**
   der Gewichtsanteil der Oberflächenbeschichtung der Partikel zwischen 0,5 und 8 %, bevorzugt zwischen 1 und 5 % am Gesamtgewicht des Füllstoffs beträgt.

6. Beschichtungszusammensetzung mit einem Füllstoff nach einem der Ansprüche 1 bis 5,
   **dadurch gekennzeichnet, dass**
   der Füllstoff in der Beschichtungszusammensetzung suspergiert ist der Gewichtsanteil des Füllstoffs zwischen 5 % und 80 %, besonders bevorzugt zwischen 10 - 50 %, insbesondere bevorzugt zwischen 12-25% am Gesamtgewicht der Beschichtungszusammensetzung beträgt.

7. Beschichtungszusammensetzung nach Anspruch 6,
   **dadurch gekennzeichnet, dass**
   die Beschichtungszusammensetzung einen pH-Wert kleiner 11.5, bevorzugt zwischen 5.5 und 11.5, besonders bevorzugt zwischen 10.0 und 11.5 aufweist.

8. Beschichtungszusammensetzung nach einem der Ansprüche 6 bis 7,
   **dadurch gekennzeichnet, dass**
   die Beschichtungszusammensetzung weiterhin einen Korrosionsinhibitor aufweist, wobei der Korrosionsinhibitor weniger als 3 %, bevorzugt unter 2 %, besonders bevorzugt unter 1 % und insbesondere bevorzugt unter 0,5 % am Gesamtgewicht der Beschichtungszusammensetzung beträgt.

9. Verwendung eines Füllstoffs nach einem der Ansprüche 1 bis 5, welcher eine Oberflächenbeschichtung aufweisende Partikel umfasst, wobei die Partikel eine silikatische oder carbonatische Komponente und in wässriger Lösung einen basischen pH-Wert aufweisen und die Oberflächenbeschichtung der Partikel einen der Stoffe Alkyltrimethoxysilan, Alkyltrietoxysilan und/oder Alkylsiloxan umfasst, in einer Beschichtungszusammensetzung zur Behandlung von Steinen, Keramiken, Metallen oder Baumaterialien gegen Durchfeuchtung, Korrosion sowie Algen-, Schimmel- und/oder Pflanzenbewuchs.

**Claims**

1. Filler, in particular powdery, for a coating composition, in particular for a paint, a lacquer or an impregnating agent,
   **characterised in that**
   the filler comprises particles which have a surface coating, wherein the particles have a siliceous or carbonatic component and a basic pH value in aqueous solution and the surface coating of the particles comprising one of the substances alkyltrimethoxysilane, alkyltriethoxysilane and/or alkyl siloxane, wherein the surface coating of the particle has ion-exchange properties and comprises a hydrophobic component and wherein the weight proportion of the surface coating of the particles is less than 10 % of the total weight of the filler.

2. Filler according to claim 1,
   **characterised in that**
   the particle consists of partially calcined dolomite, calcium silicate hydrate and/or kaolin.

3. Filler according to any of the preceding claims,
   **characterised in that**
   the alkyl group of at least one substance of the surface coating of the particles comprises at least one carbon chain having 6 to 12 carbon atoms, preferably between 7 and 10 carbon atoms, particularly preferably 8 carbon atoms.

4. Filler according to any of the preceding claims,
   **characterised in that**
   the particles have a diameter of between 0.01 $\mu$m and 5 mm, preferably in a range of from 0.02 $\mu$m to 2 mm, particularly preferably in a range of from 0.05 $\mu$m to 1 mm.

5. Filler according to any of the preceding claims,
   **characterised in that**
   the weight proportion of the surface coating of the particles is between 0.5 and 8 %, preferably between 1 and 5 % of the total weight of the filler.

6. Coating composition comprising a filler according to any of claims 1 to 5,
   **characterised in that**
   the filler is suspended in the coating composition, the weight proportion of the filler being between 5 % and 80 %, particularly preferably between 10 - 50 %, very particularly preferably between 12 - 25 % of the total weight of the coating composition.

7. Coating composition according to claim 6,
   **characterised in that**
   the coating composition has a pH value of less than 11.5, preferably of between 5.5 and 11.5, particularly preferably of between 10.0 and 11.5.

8. Coating composition according to any of claims 6 to 7,
   **characterised in that**
   the coating composition further comprises a corrosion inhibitor, wherein the corrosion inhibitor amounting to less than 3 %, preferably less than 2 %, particularly preferably less than 1 %, and very particularly preferably less than 0.5 % of the total weight of the coating composition.

9. Use of a filler according to any of claims 1 to 5, that comprises particles having a surface coating, wherein the particles have a siliceous or carbonatic component and a basic pH value in aqueous solution, and the surface coating of the particles comprising one of the substances alkyltrimethoxysilane, alkyltriethoxysilane and/or alkyl siloxane, in a coating composition for treating stones, ceramics, metals or construction materials against moisture penetration, corrosion and algae, mold and/or plant growth.

**Revendications**

1. Charge, en particulier pulvérulente, pour une composition de revêtement, en particulier pour une peinture, un vernis ou un agent d'imprégnation, **caractérisée en ce que** la charge comprend des particules qui présentent un revêtement superficiel, les particules présentant un composant silicaté ou carbonaté et, en solution aqueuse, un pH basique, et le revêtement superficiel des particules comprenant l'une des substances alkyltriméthoxysilane, alkyltriéthoxysilane et/ou alkylsiloxane, le revêtement superficiel des particules présentant des propriétés d'échange d'ions et comprenant un composant hydrophobe, et la proportion en poids du revêtement superficiel des particules étant inférieure à 10 % par rapport au poids total de la charge.

2. Charge selon la revendication 1, **caractérisée en ce que** la particule est constituée de dolomite partiellement calcinée, de silicate de calcium hydraté et/ou de kaolin.

**3.** Charge selon l'une des revendications précédentes, **caractérisée en ce que** le groupe alkyle d'au moins une substance du revêtement superficiel des particules comprend au moins une chaîne carbonée ayant 6 à 12 atomes de carbone, de préférence entre 7 et 10 atomes de carbone, d'une manière particulièrement préférée 8 atomes de carbone.

**4.** Charge selon l'une des revendications précédentes, **caractérisée en ce que** les particules présentent un diamètre compris entre 0,01 $\mu$m et 5 mm, de préférence dans une plage de 0,02 $\mu$m à 2 m, d'une manière particulièrement préférée dans une plage de 0,05 $\mu$m à 1 mm.

**5.** Charge selon l'une des revendications précédentes, **caractérisée en ce que** la proportion en poids du revêtement superficiel des particules est comprise entre 0,5 et 8 %, de préférence entre 1 et 5 % par rapport au poids total de la charge.

**6.** Composition de revêtement comportant une charge selon l'une des revendications 1 à 5, **caractérisée en ce que** la charge de la composition de revêtement est en suspension, la proportion en poids de la charge étant comprise entre 5 % et 80 %, d'une manière particulièrement préférée entre 10 et 50 %, d'une manière tout particulièrement préférée entre 12 et 25 % par rapport au poids total de la composition de revêtement.

**7.** Composition de revêtement selon la revendication 6, **caractérisée en ce que** la composition de revêtement présente un pH inférieur à 11,5, de préférence compris entre 5,5 et 11,5, d'une manière particulièrement préférée entre 10,0 et 11,5.

**8.** Composition de revêtement selon l'une des revendications 6 à 7, **caractérisée en ce que** la composition de revêtement comprend en outre un inhibiteur de corrosion, l'inhibiteur de corrosion étant présent en une quantité inférieure à 3 %, de préférence inférieure à 2 %, d'une manière particulièrement préférée inférieure à 1 % et d'une manière tout particulièrement préférée inférieure à 0,5 % par rapport au poids total de la composition de revêtement.

**9.** Utilisation d'une charge selon l'une des revendications 1 à 5, qui comprend des particules présentant un revêtement superficiel, les particules présentant un composant silicaté ou carbonaté et, en solution aqueuse, un pH basique, et le revêtement superficiel des particules comprenant l'une des substances alkyltriméthoxysilane, alkyltriéthoxysilane et/ou alkylsiloxane, dans une composition de revêtement destinée au traitement de pierres, de céramiques, de métaux ou de matériaux de construction contre une humidification, une corrosion, ainsi qu'une salissure par des algues, des moisissures et/ou des plantes.

# Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1882722 A1
- WO 2008106494 A1
- WO 2008089069 A1